Europäisches Patentamt

European Patent Office

Office européen des brevets

(11) Veröffentlichungsnummer: **0 325 712 B1**

(12) **EUROPÄISCHE PATENTSCHRIFT**

(45) Veröffentlichungstag der Patentschrift: **19.02.92**

(51) Int. Cl.⁵: **B01D 29/00**

(21) Anmeldenummer: **88118461.8**

(22) Anmeldetag: **04.11.88**

(54) **Einmalfilter mit beidseitiger Filterunterstützung.**

(30) Priorität: **22.01.88 DE 3801866**

(43) Veröffentlichungstag der Anmeldung:
**02.08.89 Patentblatt 89/31**

(45) Bekanntmachung des Hinweises auf die
Patenterteilung:
**19.02.92 Patentblatt 92/08**

(84) Benannte Vertragsstaaten:
**CH DE ES FR GB IT LI NL**

(56) Entgegenhaltungen:
**CH-A- 558 669          DE-A- 2 354 269**
**FR-A- 2 191 442        FR-A- 2 218 128**
**US-A- 3 361 261        US-A- 4 113 627**

(73) Patentinhaber: **Schleicher & Schuell GmbH**
**Grimsehlstrasse 23**
**W-3352 Einbeck(DE)**

(72) Erfinder: **Chakraborty, Asok, Dr.**
**Steinbreite 12 B**
**W-3400 Göttingen(DE)**
Erfinder: **Urlaub, Herbert, Dr.**
**Lärchenweg 10**
**W-3352 Einbeck(DE)**
Erfinder: **Grof, Franz**
**Wedekindstrasse 11**
**W-3354 Dassel(DE)**
Erfinder: **Cosack, Klaus**
**Schubertstrasse 12**
**W-3354 Dassel(DE)**

(74) Vertreter: **Jaeger, Klaus, Dipl.-Chem. Dr. et al**
**Jaeger, Steffens & Köster Patentanwälte**
**Pippinplatz 4a**
**W-8035 München-Gauting(DE)**

## Beschreibung

Die Erfindung betrifft einen Einmalfilter.

Filter der hier in Rede stehenden Art sind als Einwegfilter Produkte der Massenfertigung und werden insbesondere im Laboratoriumsbereich zur Druckfiltration von Flüssigkeiten und Gasen eingesetzt.

Das Filterelement, meist eine Membran, ist bei Filtern dieser Art zwischen die beiden Teile des Filtergehäuses eingespannt oder eingeschweißt und flächig an Filterunterstützungselementen abgestützt, die einstückig angeformt in den Gehäuseteilen ausgebildet sind.

Filter dieser Art sind beispielsweise aus der deutschen Offenlegungsschrift DE 32 02 330.8 A1 bekannt. Die bei diesem Filter verwendete Filterabstützung bildet auf der dem Flachfilterzuschnitt zugewandten Seite eine von einer Vielzahl von konzentrisch angeordneten Kreiskanälen unterbrochene ebene Fläche, wobei die Kreiskanäle durch mehrere radial verlaufende und teilweise im jeweiligen Gehäusestutzen endende Stichkanäle geschnitten sind. Der lichte Querschnitt der Stichkanäle nimmt von der Peripherie des Filtergehäuses zum zentral angeordneten Gehäusestutzen hin zu. Bei einer guten und ausgewogenen flächigen Abstützung des Filterelements ist jedoch trotz der Querschnittserweiterung der Stichkanäle der Durchfluß durch diese Filter stark gedrosselt. Filter dieser Art eignen sich daher nur für vergleichsweise geringe Durchflußraten.

Wesentlich höhere Durchflußraten, jeweils bezogen auf die Filterflächeneinheit, sind demgegenüber bei einem für die Gasfiltration bestimmten Einmalfilter möglich, der aus der amerikanischen Patentschrift US 3 782 083 A bekannt ist. Bei diesem Filter erweitern sich die Gehäusestutzen kontinuierlich trichterförmig unter Bildung einer hyperboloidischen Gehäuseinnenwandfläche, an der radial sternförmig verteilt axiale Stege angeformt sind, deren Radialkanten in einer Ebene liegen und das Filterelement abstützen. Ein solcherart abgestütztes Filterelement kann, soll es nicht einreißen, nur mäßigen Drücken ausgesetzt werden.

Ausgehend von diesem Stand der Technik liegt der Erfindung die Aufgabe zugrunde, einen aus Kunststoff hergestellten kleinen Einmalfilter der eingangs genannten Art, der nach Verfahren der Massenproduktion herstellbar ist, zu schaffen, bei dem das Filterelement, insbesondere die als Flachfilterzuschnitt ausgebildete Filtermembran, beidseitig flächig so abgestützt ist, daß mit dem Einmalfilter einerseits hohe Durchflußraten erzielbar sind, und daß solche Filtrationen andererseits auch unter hohen Drücken durchgeführt werden können, ohne daß dabei das Filterelement beschädigt wird.

Diese Aufgabe wird durch die Lehre des Anspruchs 1 gelöst.

Der wesentliche Grundgedanke der Erfindung liegt also darin, kleine Einmalfilter, die insbesondere aus Kunststoff gefertigt sind und Durchmesser im Bereich von ungefähr 2 bis 5 cm haben, mit einer separat gefertigten und dann in das Gehäuseteil eingesetzten Filterabstützplatte auszubilden, so daß die Gehäuseteile mit den Stutzen hyperboloidisch-trichterförmig kontinuierlich ineinander übergehend ausgebildet werden können, ohne daß diese trichterartige Gehäuseinnenwandfläche durch angeformte Abstützungselemente unterbrochen zu werden braucht, und daß durch die zunächst separate Fertigung der Filterabstützungselemente diese allein nach Filterdaten optimiert werden können, also im Hinblick auf einen optimalen Kompromiß zwischen Abstützung des Filterelements und möglichst großer Durchlässigkeit andererseits ausgestaltet werden können, ohne daß dabei, wie in allen anderen bekannten Fällen bei Filtern dieser Art im Hinblick auf die Kunststoff-Spritzgießtechnik formtechnische Rücksicht auf die Gestaltung der Abstützung und die gleichzeitige Entformbarkeit der Gehäuseteile genommen zu werden braucht.

Ein wichtiger Aspekt der Erfinding liegt darin, daß sich einerseits das zugeführte Fluid aufgrund der zumindest im wesentlichen hyperbolischen, trichterförmigen Aufweitung der Zu-/Ablaufstutzen der beiden aus bruchfestem und weitgehend chemikalienbeständigen Kunststoff bestehenden Gehäuseteile bereits vor Erreichen der zulaufseitigen Filterunterstützung, wobei diese unter anderem als Rückstausieb fungiert, über nahezu den gesamten Querschnitt der Stützplatte ausbreiten kann, wodurch der im Zentrum des Fluidstroms auftretende maximale Druck erheblich reduziert wird, und demzufolge die Filtermembranoberfläche gleichmäßiger durch das zu filtrierende Medium, das durch die Öffnungen der Filterunterstützung auf die Membran gelangt, bzw. durch Filterrückstände belastet wird.

Gleichzeitig erfolgt aufgrund der Verteilung eine optimale Ausnutzung der Filterfläche. Die Filterunterstützungen berühren die Gehäuseteile lediglich in ihren Randbereichen. Weiterhin ist die Ausgestaltung der ebenfalls aus bruchfestem und weitgehend chemikalienbeständigem Kunststoff bestehenden Filterunterstützungen ein entscheidender Faktor des erfindungsgemäßen Einmalfilters. Der durch das im Zentralbereich der zulaufseitigen Filterunterstützung auftreffende Fluid bedingte Druck wird ergänzend zu der Druckverminderung durch die oben genannte Querschnittsaufweitung des Zulaufstutzens abermals durch eine im Zentrum angeordnete Prallscheibe erheblich reduziert, wodurch die Filtermembran im zentralen Bereich zusätzlich entlastet und vor Auswaschungen geschützt wird.

Das Fluid gelangt durch die im wesentlichen radförmige, rostartige Filterunterstützung, die aus konzentrischen mit konstantem radialem Abstand in einer Ebene angeordneten kreisförmigen Ringstegen und dazwischenliegenden ebenfalls konzentrischen, kreisförmigen Zwischenräumen besteht, auf die Filtermembran. Im Zentrum dieser Ringstege ist die oben genannte Prallscheibe derart angeordnet, daß die filtermembranseitigen Ringsteg- /Prallscheibeflächen in einer Ebene liegen und so die Rückstausieb-/Auflagefläche für die Filtermembran bilden.

Auf der Rückseite, d.h. der Membran abgewandten Seite, sind die Ringstege und Prallplatte durch mehrere sternförmig, zentral zusammenlaufende radiale Trägerstreben gehalten.

In einer weiteren vorteilhaften Ausführung des erfindungsgemäßen Einmalfilters sind die äußeren Ringstege der Filterunterstützungen derart breit ausgebildet, daß der Randbereich der Filtermembran eine Auflagefläche erhält, wodurch eine Randwölbung der Membran im aktiven Filterbereich verhindert wird.

Nach einer anderen Weiterbildung des erfindungsgemäßen Einmalfilters sind die Außenränder der peripheren Ringstege derart geformt, daß sie einander einerseits unter Einspannung der entsprechend geschnittenen Filtermembran fluiddicht, formschlüssig hintergreifen, so daß eine weitere Sicherung gegen Undichtigkeit und unerwünschte Kriechwege des Fluids um den Membranrand herum erreicht wird und andererseits zur fluiddichten Selbstfestsetzung der Filterunterstützungen in die beiden Gehäuseteile mit entsprechend ausgeformten komplementären Innenrändern geeignet sind. In ähnlicher Weise hintergreifen sich auch die Ränder der Gehäuseteile fluiddicht und formschlüssig, wodurch zusätzlich die Drucktauglichkeit neben der nochmaligen Abdichtung verbessert wird. Der fluiddichte Formschluß der äußeren Ränder der Gehäuseteile ist darüber hinaus durch eine umlaufende druckbeständige Einfassung in Form eines umspritzten Rings gewährleistet, wobei dieser Ring zur Kennzeichnung spezifischer Verwendungszwecke auch in bestimmten Farben gehalten sein kann.

Eine weitere nützliche Ausgestaltung des Einmalfilters stellt die schlaucholivenartige mit ringwulstförmigen Ausbuchtungen versehene Ausführung der Zu-/Ablaufstutzen der beiden Gehäuseteile dar, wodurch der Anschluß des Einmalfilters einerseits erleichtert wird und andererseits ein Abrutschen der Schläuche erschwert wird.

Vorteilhaft an dem im wesentlichen symmetrisch aufgebauten Einmalfilter ist auch, daß er in beiden möglichen Strömungsrichtungen gleichermaßen funktionsfähig ist, so daß bei der Montage nicht auf eine vorgegebene Orientierung geachtet werden muß.

Die ringförmigen Zwischenräume der im filtratseitigen Gehäuseteile vorhandenen Filterunterstützung fungieren als Drainageleitungen, wodurch die Filtratablaufgeschwindigkeit ausreichend groß ist, so daß letztendlich die Filtriergeschwindigkeit und auch die Durchsatzmenge erhöht werden können.

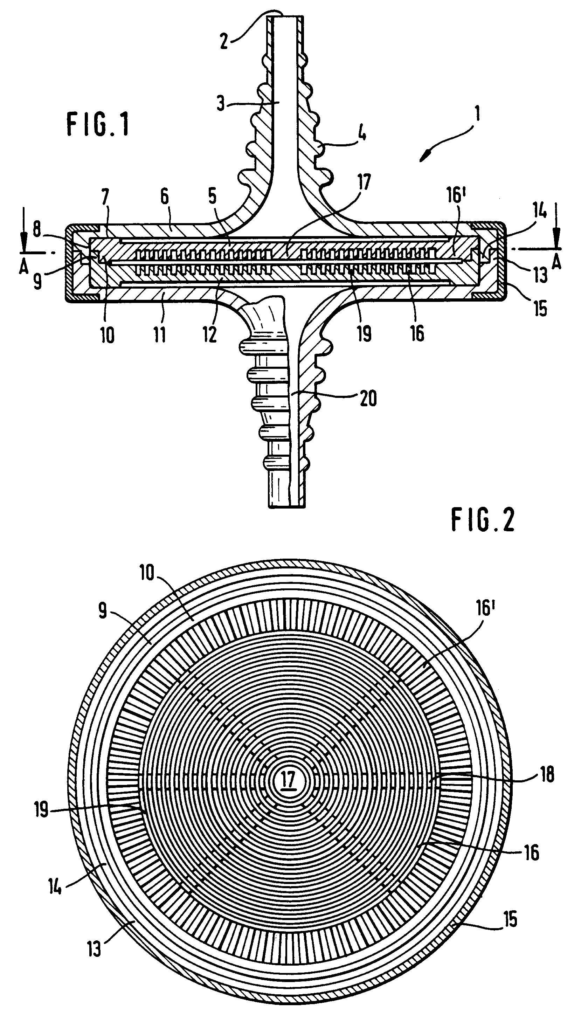

Die Erfindung ist im folgenden anhand eines Ausführungsbeispiels in Verbindung mit den Figuren 1 und 2 näher erläutert.

Fig. 1 zeigt einen schematischen vertikalen Schnitt durch den Einmalfilter;

Fig. 2 zeigt einen schematischen horizontalen Schnitt durch den Einmalfilter entlang der Linie A-A in Fig. 1.

Das unter Druck stehende Fluid wird dem erfindungsgemäßen Einmalfilter 1 (siehe Fig. 1) durch die Öffnung 2 des Einlaufstutzens 3 z.B. über einen Schlauch zugeführt. Das Abrutschen des Schlauches wird durch die an dem olivenartigen Stutzen ausgestalteten ringwulstförmigen Ausbuchtungen 4 erschwert. Aufgrund der zumindest im wesentlichen hyperbolisch, trichterförmigen Aufweitung des Stutzens 3 wird der Druck des im Zentrum der Filterunterstützung 5 auftreffenden Fluidstroms auf einen Bruchteil des ursprünglichen Wertes reduziert. Die Vergrößerung des Stromquerschnitts fördert gleichzeitig die gleichmäßige Verteilung des zu filtrierenden Fluids über die Oberfläche der Filterunterstützungsplatte 5, wodurch eine optimale Nutzung der Filtermembranfläche erreicht wird.

Die Filterunterstützung 5 berührt das Gehäuseoberteil 6 lediglich in den Randbereichen 7,8, wobei der Außenrand 8 derart geformt ist, daß er mit dem entsprechenden Innenrand des Gehäuseteils 6 fluiddicht und formschlüssig verbunden ist, wodurch ein fester sicherer Sitz der Filterunterstützung 5 gewährleistet wird. Weiterhin ist er derart geformt, daß seine Lippe 9 den komplementären Außenrand 10 der im Gehäuseunterteil 11 in analoger Weise eingepaßten Filterunterstützung 12 ebenfalls fluiddicht und formschlüssig umspannt. Hierdurch wird die Dichtigkeit des Einmalfilters sichergestellt und ein unerwünschter Kriechstrom des zu filtrierenden Fluids um den Membranrand herum verhindert. Zusätzlich werden die beiden Gehäuseteile 6,11 durch einen der sich ebenfalls fluiddicht und formschlüssig hintergreifenden Außenränder 13,14 umlaufenden, druckbeständigen umspritzten Einfassungsring 15 zusammengehalten.

Die Filterunterstützungen 5,12 sind im wesentlichen radförmige, rostartige Platten, die aus konzentrischen mit konstantem radialem Abstand angeordneten kreisförmigen Ringstegen 16 und einer im Zentrum dieser Ringstege angeordneten Prallscheibe 17 aufgebaut, wobei Ringstege 16 und Prallscheibe 17 durch die auf der rückwärtigen, der Filtermembran abgewandten Seite der Filterunterstützungen, durch sternförmig zentral zusammenlaufende radiale Trägerstreben 18 gehaltert werden (siehe Fig. 2). Die Unterkanten der Ringstege 16 und der Prallscheibe 17 liegen exakt in einer Ebene. Die Filtermembran (in den Fig. nicht zu sehen) ist zwischen den peripheren Ringstegen 16′ der Filterunterstützungen 5,12 in den Bereichen 18 fluiddicht eingeklemmt, während durch die breite Auflagefläche dieser Ringstege 16′ eine durch das Einklemmen bedingte Wölbung der Filtermembran verhindert wird.

Bei einem Durchmesser von 50 mm sind etwa 14 dieser Ringstege vorgesehen. Ein Teil des Fluidstroms trifft nun im zentralen Bereich auf die Prallscheibe 17 und wird parallel zur Filtermembran seitlich abgelenkt, wo er dann zusammen mit dem übrigen über die Fläche der Filterunterstützung verteilten Fluid durch die ringförmigen Spalte 19 zwischen den Ringstegen 16 hindurch auf die Filtermembran gelangt. Die Filterunterstützung 5 fungiert im übrigen auch als Rückstausieb, das die Filtermembran in ausreichendem Maße auf der filterunterstützung 12 niederhält. Nach Passieren der Filtermembran wird das filtrierte Fluid die Filterunterstützung 12 durch die ringförmigen als Drainage wirkenden Spalte 19 durchfließen und den Einmalfilterhalter 1 über den Ablaufstutzen 20, der dem Zulaufstutzen 3 in der Form entspricht, und z.B. einem daran angeschlossenen Schlauch wieder verlassen.

Das in den Fig. 1 und 2 gezeigte Ausführungsbeispiel des Einmalfilters kann für Druckfilter verwendet werden, deren Durchmesser in der Größenordnung von 10 bis 100 mm liegt. Prinzipiell steht einer Verwendung dieses Einmalfilters auch für kleinere oder größere Durchmesser jedoch nicht im Wege. Dabei kann die Anzahl der Ringstege 16 /Zwischenräume 19 und Radialstreben 18 je nach Durchmesser des Einmalfilterhalters erhöht oder erniedrigt werden. Ausschlaggebend ist hierbei, daß die Filtermembran ausreichend gleichmäßig auf der Filterunterstützung 12 niedergehalten wird bzw. das Fluid relativ ungehindert und gleichmäßig auf die Filtermembran gelangt, oder abgeführt wird.

**Patentansprüche**

1. Im wesentlichen symmetrisch aufgebauter Einmalfilter mit einem flachen zweiteiligen Gehäuse, das aus zwei fest und fluiddicht miteinander verbundenen Gehäuseteilen (6,11) aufgebaut ist,
   i) in denen sich jeweils eine Filterunterstützung (5,12) befindet, wobei zwischen diesen Filterunterstützungen (5,12) ein Filterelement angeordnet ist,
   ii) die jeweils einen zentral angeordneten Stutzen (3,20) aufweisen, der im Inneren der Gehäuseteile (6,11) zur Filterunterstützung (5,12) hin zumindest im wesentlichen hyperbolisch-trichterförmig aufgeweitet ist, so daß die Filterunterstützungen (5,12) die Gehäuseteile (6,11) nur an ihren Randbereichen (7,8) berühren, und
   iii) die einander fluiddicht und radial formschlüssig hintergreifende Ränder (13,14) besitzen, wobei die Filterunterstützungen (5,12)
      a) rostartig ausgestaltet und als separate Teile hergestellt sind,
      b) konzentrische, mit radialem Abstand voneinander in einer Ebene angeordnete kreisförmige Ringstege (16) besitzen,
      c) eine im Zentrum dieser Ringstege (16) und koplanar zu diesen angeordnete Prallscheibe (17) aufweisen,
      d) sternförmig zentral zusammenlaufende radiale Trägerstege (18) aufweisen, auf denen die Ringstege (16) und die Prallscheibe (17) auf der dem Filterelement abgewandten Seite der Filterunterstützung (5,12) gehalten sind, und
      e) einen peripheren Ringsteg (16') besitzen, der eine im Vergleich zu den Ringstegen (16) breite Auflagefläche aufweist, wobei die peripheren Ringstege (16') mit Lippen (9,10) ausgestattet sind, die einander unter Einspannung des entsprechend zugeschnittenen Filterelementes fluiddicht formschlüssig hintergreifen.

2. Einmalfilter nach Anspruch 1, **gekennzeichnet** durch eine umlaufende druckbeständige Einfassung der Außenränder (13,14) der Gehäuseteile (6,11) in Form eines umspritzten Ringes (15).

3. Einmalfilter nach Anspruch 1 oder 2, **gekennzeichnet** durch die Ausbildung der Stutzen (3,20) beider Gehäuseteile (6,11) als Schlaucholiven mit ringwulstförmigen Ausbuchtungen (4).

4. Einmalfilter nach einem der Ansprüche 1 bis 3, dadurch **gekennzeichnet,** daß die Gehäuseteile (6,11) und die Filterunterstützungen (5,12) aus Kunststoff bestehen.

**Claims**

1. Essentially symmetrically constructed disposable filter with a flat two-part housing which is constructed from two housing parts (6, 11) connected to one another firmly and in a fluidtight manner,
      i) in each of which a filter support (5, 12) is located, a filter element being arranged between these filter supports (5, 12),

ii) which each have a centrally arranged connection piece (3, 20) which is widened at least essentially in a hyperbolically funnel-shaped manner towards the filter supports (5, 12) on the inside of the housing parts (6, 11), so that the filter supports (5, 12) touch the housing parts (6, 11) only in their edge regions (7, 8), and

iii) which possess edges (13, 14) engaging behind one another radially positively and in a fluid-tight manner whilst the filter supports (5, 12)

> a) are made grate-like and are produced as separate parts,
>
> b) have concentric circular annular webs (16) arranged in one plane at a radial distance from one another,
>
> c) possess a baffle plate (17) arranged in the centre of these annular webs (16) and in a coplanar manner with these,
>
> d) have radial carrier struts (18) which converge centrally in a star-shaped manner and on which the annular webs (16) and the baffle plate (17) are retained on the side of the filter support (5, 12) facing away from the filter element, and
>
> e) possess a peripheral annular web (16') having a bearing surface wide in comparison with the annular webs (16), the peripheral annular webs (16') being equipped with lips (9, 10) which engage behind one another positively and in a fluid-tight manner, at the same time clamping the correspondingly cut filter element.

**2.** Disposable filter according to Claim 1, characterised by a continuous pressure-resistant surround of the outer edges (13, 14) of the housing parts (6, 11) in the form of a ring (15) injected round.

**3.** Disposable filter according to Claim 1 or 2, characterised by the design of the connection pieces (3, 20) of the two housing parts (6, 11) as hose olives with bulges (4) in the form of annular beads.

**4.** Disposable filter according to one of Claims 1 to 3, characterised in that the housing parts (6, 11) and the filter supports (5, 12) consist of plastic.

**Revendications**

**1.** Filtre à jeter monté pour l'essentiel de façon symétrique et muni d'un boîtier plat et double qui est constitué de deux parties de boîtier (6, 11) reliées entre elles de façon rigide et étanche,

1) dans chacune desquelles se trouve un support de filtre (5, 12), un élément de filtre étant disposé entre ces supports de filtre (5, 12),

2) qui présentent chacun une tubulure (3, 20) disposée centralement qui est évasée à l'intérieur des parties du boîtier, en direction du support de filtre (5, 12) et au moins pour l'essentiel hyperboliquement et en entonnoir, de sorte que les supports de filtre (5, 12) ne touchent les parties du boîtier (6, 11) que sur leurs zones périphériques (7, 8), et

3) qui possèdent des bords (13, 14) empiétant mutuellement l'un sur l'autre par l'arrière, de façon étanche vis à vis du liquide et radialement avec engagement positif, les supports de filtre (5, 12)

> a) étant façonnés en forme de grille et fabriqués en tant que pièces séparées,
>
> b) possédant des baguettes annulaires (16) concentriques et circulaires, disposées sur un plan avec un écartement radial entre elles,
>
> c) présentant un disque de chicane (17) disposé au centre de ces baguettes annulaires (16) et disposées coplanairement à celles-ci,
>
> d) présentant des âmes de poutre (18) radiales convergeant centralement en forme d'étoile, sur lesquelles reposent les baguettes annulaires (16) et le disque de chicane (17), sur le côté du support de filtre (5, 12) opposé à l'élément de filtre, et
>
> e) possédant une baguette annulaire (16') périphérique qui présente une large surface d'appui, comparativement aux baguettes annulaires (16), les baguettes annulaires périphériques (16') étant pourvues de lèvres (9, 10) qui empiètent mutuellement les unes sur les autres par l'arrière, de façon étanche en ce qui concerne le liquide et avec engagement positif, en serrant l'élément de filtre taillé en conséquence aux dimensions nécessaires.

**2.** Filtre à jeter selon la revendication 1, caractérisé par un encadrement périphérique, résistant à la pression, des bords extérieurs (13, 14) des parties du boîtier, sous forme d'un anneau (15) couvert par extrusion.

**3.** Filtre à jeter selon les revendications 1 ou 2, caractérisé par la configuration des tubulures (3, 20) des deux parties du boîtier (6, 11) en tant qu'olives tubulaires munies de courbures en forme de tore (4).

4. Filtre à jeter selon l'une des revendications 1 à 3, caractérisé en ce que les parties du boîtier (6, 11) et les supports de filtre (5, 12) sont composés de matière plastique.

FIG.1

FIG.2